# EUROPEAN PATENT APPLICATION

(11) **EP 1 975 484 A2**
(43) Date of publication of application: **01.10.2008**
(21) Application number: 07075806.5
(22) Date of filing: 13.09.2007
(51) Int. Cl.: F16K 27/02, F16K 27/06

(54) **System used for safe fixing of caps, valves or similar items to containers**

(30) Priority: 28.03.2007 IT MC20070061
(71) Applicant: O.M.C.E. di Rocchetti Amleto S.p.A., 60010 Ripe (AN) (IT)
(72) Inventor: Rocchetti, Giovanni, Frazione Brugnetto, 60010 Ripe (IT)
(74) Representative: Baldi, Claudio

(57) **Abstract**

The present invention relates to a system used for safe fixing of caps, valves or similar items to containers, in particular of the type actuated by screwing taps, caps or similar items onto the mouth (1) of a container (S), providing that the removal or uncoupling between the closing/opening device (3) and the said mouth (1) involves the total or partial breakage of a ring (2) placed between the said closing/opening device (3) and the mouth (1).

## Description

The present invention relates to a system used for safe fixing of caps, valves or similar items to containers, in particular of the type used to fix taps, caps or similar items to a container.

Containers for fluids are typically provided with at least one threaded mouth to fill/empty the said containers.

In general, according to the known technique, a closing/opening device of the mouth, such as a cap or a tap, is fixed to the mouth by means of a nut used to block the device on the mouth.

In practical terms, the opening/closing device is applied on the mouth and held in place by a nut that is screwed onto the thread of the mouth to hold the device and guarantee the watertight seal of the device.

In particular, the present invention applies to the field of containers for fluids that are subject to handling, that is to say plastic containers with thin walls, often provided with an external protective support network structure and/or a standard wooden pallet.

According to the known technique, these types of containers are provided with threaded mouths on which taps, valves or caps are applied to control the emptying of the container, the said taps, valves or caps being fixed to the mouth by means of a seal nut, such as in the case disclosed and described in patents EP 1 518 820 and EP 1 389 703.

A first inconvenience of the known technique consists in the fact that it is necessary to place the device in position and then tighten the nut, maintaining the correct position of the valve with respect to the container. In fact, the inclination of the axis of the valve or tap may result in incorrect operation, preventing the correct use of the valve or tap. If the valve is not positioned correctly, leaks of the fluid stored in the container may occur.

A second inconvenient is related to the fact that the containers normally provided with the said valves are typically used for the transportation of fluids. Because of handling, the container is often subject to vibrations, such as the ones caused by the means of transport, which are impossible to eliminate and may cause the gradual loosening of the nut used to fix the valve, cap or similar item.

The valve, cap or similar item is typically provided on the bottom of the container, in order to allow for complete emptying, and because of this, when the container is full, the valve and the nut used to fix it to the container or mouth are subject to the pressure of the fluid stored in the container, which generates a corresponding force on the nut, valve or tap.

The accidental opening of the container is a very serious inconvenience, including in terms of safety.

A further inconvenience consists in the fact that the caps or valves according to the known technique may be subject to tampering, with consequent undesired extraction of the fluid stored in the container, without any proof of spillage.

This is an especially serious problem, since the container may be used for food liquids, which are therefore subject to alteration, with serious consequences.

The installation of the fixing devices according to the known technique requires great attention and it is often necessary to re-position the fixing nut to obtain a good coupling of the tap, cap or valve with the container, being a time-wasting operation.

The purpose of the present invention is to devise a fixing and safety device for caps, valves or similar items of containers, which is able to overcome the drawbacks of the known fixing devices with a simple inexpensive solution.

The present invention relates to a system for safe fixing of caps, valves or similar items of containers for fluids, which comprises at least one mouth or flange applied to the said container, the said mouth being designed to surround a hole in the wall of the container, and being provided with at least one thread or retention profile with at least one saw tooth, the said system also comprising a closing/opening device of the said hole in the wall of the container, such as a tap, cap, valve or similar item, designed to be coupled with the mouth to close/open the hole, the said closing device being provided at the end coupled with the mouth with a coupling profile having at least one thread designed to engage with the corresponding thread of the mouth and provided with at least a first part of a retention device able to cooperate with a second part of a retention device, being the second part of the retention device provided on a fixing ring mounted between the said closing/opening device and the mouth, and being also provided with at least one, preferably several teeth to engage in rotation with the saw tooth in such a way that engagement allows for the rotation of the fixing ring only in clockwise or anticlockwise direction.

The present invention basically provides for a fixing ring suitably interfaced with the mouth of the container and with the closing/opening device, such as a valve, tap, cap or similar item.

On the side interfaced with the mouth, the ring is provided with inclined teeth that cooperate with a saw-tooth profile provided on the mouth, preferably upstream the threaded part of the mouth. The cooperation of the inclined teeth with the saw-tooth profile allows for rotating the ring in clockwise or anticlockwise direction only, according to the mutual arrangement of the inclined teeth and the saw-tooth profile.

On the opposite side of the ring, that is to say on the side that is interfaced with the closing/opening device, such as a valve, tap, cap or similar item, according to a preferred embodiment of the invention the ring has one or several teeth that are designed to engage with corresponding housings on the side of the closing/opening device in such a way that when the teeth are engaged in their housings the rotation of the closing/opening means with respect to the ring is impossible.

The ring is situated between the closing/opening device and the mouth and the closing/opening device is screwed onto the mouth by means of the thread provided on the closing/opening device and mouth. The screwing of the closing/opening device on the mouth pushes the ring into its housing and engages the teeth of the ring in the corresponding housings of the closing/opening device and the inclined teeth of the ring in the saw-tooth profile of the mouth, thus blocking the rotation of the closing/opening device which is therefore permanently secured to the container.

In this way, the unscrewing of the closing/opening device from the mouth is advantageously prohibited, thus preventing the accidental or voluntary opening aimed at tampering or stealing the fluid stored in the container.

In fact, the removal of the closing/opening device implies the total or partial breakage of the ring, in order to allow for rotation of the closing/opening device in the unscrewing direction, thus providing a proof of opening.

For this reason, the system according to the present invention advantageously integrates different functions: it prohibits the accidental unscrewing of the closing/opening device or the undesired emptying of the container, it contributes to the correct positioning of the closing/opening device with respect to the container, it provides for rapid assembly by simply screwing the closing/opening device on the mouth, thus engaging the ring both with the closing/opening device and the container, without the need to perform any additional operations.

Further characteristics and improvements are the subject of the following claims and subclaims.

The characteristics and advantages of the invention will become evident from the following detailed description of the figures, whereby.
Fig. 1 is a perspective view of the ring of the present invention;
Fig. 2 is a perspective view of the mouth of the present invention;
Fig. 3 is a side perspective view of the closing/opening device of the present invention;
Fig. 4 is a sectional view of the system of the present invention;

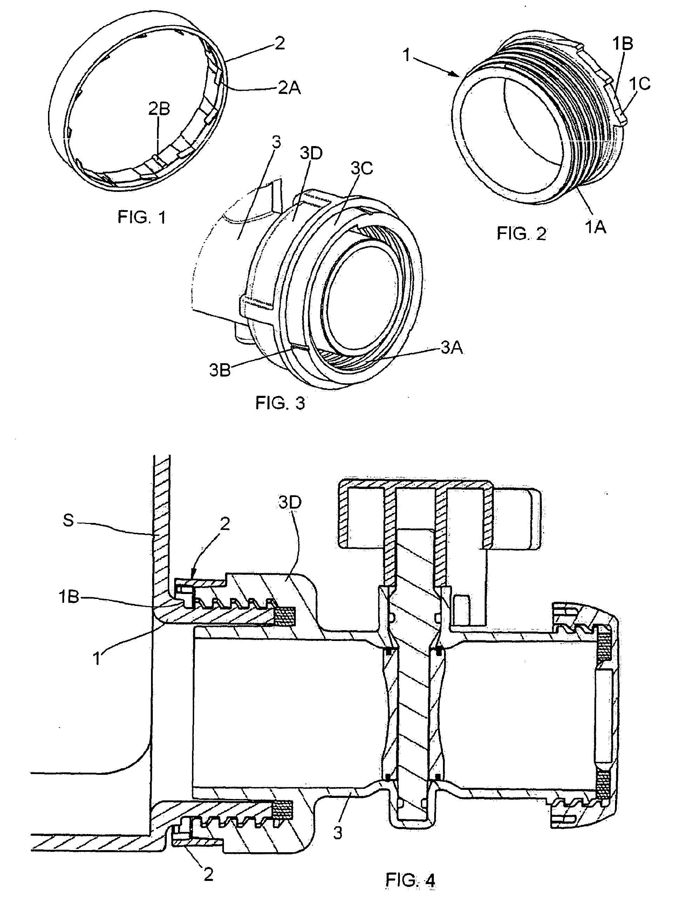

Figs. 1, 2 and 3 illustrate the different parts of the system according to the present invention.

In particular, as shown in fig. 1, a fixing ring (2) is mounted between the closing/opening device (3) illustrated in fig. 3 and a mouth (1) illustrated in fig. 2 and applied to a container or moulded with it.

The fixing ring is provided with at least one, preferably more than one inclined tooth (2A) designed to engage in rotation with at least one saw tooth (1 C) or saw-tooth profile provided on the mouth (1) in such a way that the fixing ring (2) only rotates in one direction, either clockwise or anticlockwise, with respect to the mouth (1).

As shown in fig. 1, the ring (2) is also provided with a series of teeth (2B), configured for example as relieves, on the internal diameter of the ring (2). The teeth (2B) are designed to engage with corresponding housings (3B), configured for example as grooves, provided in the ending section of the closing/opening device (3).

When the teeth (2B) are engaged with the corresponding housings (3B), the closing/opening device (3) cannot rotate with respect to the ring (2) and the ring (2) and closing/opening device (3) are mutually coupled in rotation.

As shown in fig. 4, when mounted, 4, the ring (2) is pressed between the closing/opening device (3) and the mouth (1), in such a way that the inclined teeth (2A) cooperate with the saw-tooth profile (1 C) to avoid the rotation of the closing/opening device (3) with respect to the mouth (1), thus preventing the removal of the closing/opening device (3) from the mouth.

The removal can only be performed by totally or partially breaking the ring (2) and/or deforming or breaking the inclined teeth (2A) and/or deforming or breaking the teeth (2B), meaning that the accidental removal of the closing/opening device (3) is impossible, for example due to vibrations, and also easy to identify based on the conditions of the ring (2).

According to a preferred embodiment illustrated in the enclosed figures, the saw-tooth profile (1 C) is obtained in a diameter of the mouth larger than the diameter of the mouth with thread (1A) in such a way that the ring (2) is automatically positioned in the housing when the closing/opening device (3) is screwed on the mouth, thus making mounting operations extremely rapid and easy, while ensuring the accurate coupling of the parts.

According to the preferred embodiment illustrated in the enclosed figures, the retention device is composed of a first part consisting in housings (3B) for teeth and a second part consisting in one or more teeth (2B) provided on a fixing ring (2); however, without leaving the scope and the precepts of the present invention, the first part of the retention device can consist in teeth and the second part in housings for the said teeth.

According to the preferred embodiment illustrated in the enclosed figures, the thread (1A) on the mouth (1) is external to the diameter of the mouth (1) and the corresponding thread (3A) on the body of the closing/opening body (3) is internal to the diameter of the body, with possibility of mutual reciprocation, without leaving the protective scope of the present invention.

Moreover, the closing/opening device (3) is preferably provided with a gripping ring (3D).

The saw-tooth profile (1 C) is preferably obtained on a collar of the mouth (1 B), that is to say an area with increased average diameter of the mouth and is positioned on the side of the mouth designed to be interfaced with the container (S) opposite to the side interfaced with the closing/opening device (3).

In this way, during mounting, the teeth (2B) of the ring (2) are advantageously held, being designed in such a way not to extend completely on the surface of the ring: in fact, the teeth (2B) extend from the border of the ring (2) designed to be interfaced with the closing/opening device (3) until a predefined distance from the border. The portion of internal surface of the ring (2) that is left free by the teeth (2B) is provided with inclined teeth (2A), which are applied or obtained from the same piece, as shown in fig. 1.

In this way, when it is positioned between the closing/opening device (3) and the mouth (1), the ring (2) advantageously brings the side of the teeth (2B) in contact with the collar (1B) of the mouth (1) that represents the stop limit for the teeth (2B).

The thickness of the collar (1 B) is preferably equal to the distance between the end of the teeth (2B) and the border of the ring (2) designed to be associated with the mouth (1).

In the preferred embodiment in which the mouth (1) is obtained from the same piece with the container (S), for example with the same material as the container, the collar (1 B) is preferably obtained by means of local thickening of the container wall.

According to a preferred and especially advantageous embodiment of the invention, the collar (1 B) has three saw-tooth profiles (1 C) in diametrically opposite position to other three profiles.

The inclined teeth (2A) of the ring (2) actuate on the surface of the saw teeth (1 C) in such a way to permit the rotation only in clockwise direction, that is to say in the direction of mutual coupling of the two threads (1A) and (3A), and consequently mutual engagement of the closing/opening device (3) with the mouth (1).

The closing/opening device can consist in a valve, tap, screwed cap or any other suitable means to close the hole used to spill the fluid store in the container.

The present invention can be applied to any type of container, tank, bag, or similar receptacle, although it is most advantageously used in combination with containers used to store fluids for transportation purposes, that is to say typically plastic containers with thin walls, often provided with an external protective support external network structure and/or a standard wooden pallet and in combination with a closing/opening device consisting in a manually actuated butterfly-valve, as shown in fig. 4.

## Claims

1. System for safe fixing of caps, valves or similar items to containers for fluids, **characterised by** the fact that it comprises at least one mouth (1) or flange applied to the said container (2), the said mouth (1) being designed to surround a hole in the wall of the container, and being provided with at least one thread (1A) and one retention profile with at least one saw tooth (1C), the said fixing system also comprising at least a closing/opening device (3) of the said hole in the wall of the container, such as a tap, cap, valve or similar item, designed to be coupled with the mouth (1) to close/open the hole, the said closing device (3) being provided at the end coupled with the mouth (1) with a coupling profile having at least one thread (3A) designed to engage with the corresponding thread (1A) of the mouth (1) and provided with at least a first part (3B) of a retention device able to cooperate with a second part (2B) of a retention device, being the second part of the retention device provided on a fixing ring (2) mounted between the said closing/opening device (3) and the mouth (1), and being also provided with at least one, preferably several inclined teeth (2A) designed to engage in rotation with at least one saw tooth (1 C) in such a way that engagement allows for rotation of the fixing ring (2) only in clockwise or anticlockwise direction.

2. System according to the preceding claim, **characterised by** the fact that the retention device consists in one or several teeth (2B) and one or several niches or housings (3B) for the said teeth (2B), being the said teeth (2B) and/or housings (3B) the first and/or second part of the retention device.

3. System according to one or more of the preceding claims, **characterised by** the fact that the fixing ring (2) is provided with the second part of the retention device, being the said second part composed of at least one or several teeth (2B), with relief configuration, on the internal diameter of the ring (2).

4. System according to one or more of the preceding claims, **characterised by** the fact that the one or several teeth (2B) extend from the border of the ring (2) designed to be interfaced with the closing/opening device (3) until a predefined distance from the border.

5. System according to one or more of the preceding claims, **characterised by** the fact that the closing/opening device (3) is provided with the first part of the retention device. being the said first part composed of housings (3B) with groove configuration on the end section of the closing/opening device (3).

6. System according to one or more of the preceding claims, **characterised by** the fact that the portion of internal surface of the ring (2) that is left free by the teeth (2B) is provided with the said inclined teeth (2A) applied or obtained from the same piece.

7. System according to one or more of the preceding claims, **characterised by** the fact that the saw-tooth profile (1 C) is provided in a diameter of the mouth larger than the diameter with the thread (1A), the said area being obtained in the collar (1 B) of the mouth (1).

8. System according to one or more of the preceding claims, **characterised by** the fact that the saw-tooth profiles (1 C) are preferably obtained on the mouth (1) in the collar (1B) of the mouth (1), that is to say an area with increased average diameter of the mouth and positioned on the side of the mouth designed to be interfaced with the container, opposite to the side designed to be interfaced with the closing/opening device (3).

9. System according to one or more of the preceding claims, **characterised by** the fact that the collar (1B) of the mouth (1) is a stop limit for the teeth (2B) of the ring (2) in mounted position.

10. System according to one or more of the preceding claims, **characterised by** the fact that when the teeth (2B) are engaged with the corresponding housings (3B), the closing/opening device (3) cannot rotate with respect to the ring (2) and the ring (2) and closing/opening device (3) are mutually coupled in rotation.

11. System according to one or more of the preceding claims, **characterised by** the fact that, when mounted, the ring (2) is pressed between the closing/opening device (3) and the mouth (1), in such a way that the inclined teeth (2A) cooperate with the saw-tooth profile (1 C) to avoid the rotation of the closing/opening device (3) with respect to the mouth (1), thus preventing the removal of the closing/opening device (3) from the mouth (1).

12. System according to one or more of the preceding claims, **characterised by** the fact that the removal or uncoupling between the closing/opening device (3) and the mouth (1) causes the total or partial breakage of the ring (2) and/or the deformation or breakage of the inclined teeth (2A) and/or the deformation or breakage of the teeth (2B).

13. System according to one or more of the preceding claims, **characterised by** the fact that the thread (1A) on the mouth (1) is external to the diameter of the mouth (1) and the corresponding thread (3A) on the body of the closing/opening device (3) is internal to the diameter of the body, with possibility of mutual reciprocation.

14. System according to one or more of the preceding claims, **characterised by** the fact that the closing/opening device (3) is preferably provided with a gripping ring (3D).

15. System according to one or more of the preceding claims, **characterised by** the fact that the thickness of the collar (1 B) is preferably equal to the distance between the end of the teeth (2B) and the border of the ring (2) designed to be associated with the mouth (1).

16. System according to one or more of the preceding claims, **characterised by** the fact that the mouth (1) is obtained from the same piece with the container (S), for example with the same material as the container, and the collar (1B) is preferably obtained by means of local thickening of the container wall.

17. System according to one or more of the preceding claims, **characterised by** the fact that the collar (1B) has three saw-tooth profiles (1 C) in diametrically opposite position to other three profiles.

18. System according to one or more of the preceding claims, **characterised by** the fact that the closing/opening device is a valve, a tap, a screwed cap or any other suitable means to close the hole used to spill the fluid stored in the container.

19. Combination of container, tank, bag or similar receptacle, in particular for the storage of fluids for transportation purposes, that is to say plastic containers with thin walls provided with an external protective support network structure and/or a standard wooden pallet, with a closing/opening device (3) composed of a manually actuated butterfly-valve (F) and a system as claimed in one or more of claims from 1 to 18.
